# DEMANDE DE BREVET EUROPEEN

(11) **EP 4 847 833 A1**
(43) Date de publication de la demande: **02.12.2026**
(21) Numéro de dépôt: 26171283.0
(22) Date de dépôt: 08.04.2026
(51) Int. Cl.: F23R 3/52

(54) **TURBINE À GAZ AVEC UNE CHAMBRE DE COMBUSTION MUNIE D'ENTRÉES D'AIR RADIALES ET INSTALLATION MOTRICE**

(30) Priorité: 26.05.2025 FR 2505640
(71) Demandeur: Airbus Helicopters, 13725 Marignane Cedex (FR)
(72) Inventeur: HONNORAT, Olivier, 13090 AIX EN PROVENCE (FR); RANAIVOSON, Jonathan, 13002 MARSEILLE (FR); DUBOURG, Christophe, 13100 LE THOLONET (FR)
(74) Mandataire: GPI Brevets

(57) **Abrégé**

La présente invention concerne une turbine à gaz (10) comportant un compresseur (1) et un corps (2) logeant une chambre de combustion (3). Ledit corps (2) comporte deux ouvertures d'admission (21,22) configurées pour faire entrer de l'air comprimé provenant dudit compresseur (1) dans ledit corps (2), ledit air comprimé étant destiné à alimenter ladite chambre de combustion (3). Lesdites deux ouvertures d'admission (21,22) se font face de part et d'autre dudit corps (2) et de ladite chambre de combustion (3), et sont sensiblement radiales, voire coaxiales. Deux conduites d'entrée (18,19) acheminant l'air comprimé depuis ledit compresseur (1) sont reliées audit corps (2) et communiquent fluidiquement respectivement avec lesdites deux ouvertures d'admission (21,22).

## Description

La présente invention se trouve dans le domaine des moteurs à combustion, et des turbines à gaz en particulier.

L'invention concerne une turbine à gaz dont le corps logeant la chambre de combustion est muni de deux entrées d'air radiales ainsi qu'une installation motrice comportant une telle turbine à gaz.

Une turbine à gaz comporte un générateur de gaz alimenté en air frais. Ce générateur de gaz est muni d'un compresseur ayant un ou plusieurs étages de compression, par exemple de type compresseur centrifuge, pour comprimer de l'air provenant de l'extérieur. L'air comprimé est ensuite dirigé dans une chambre de combustion du générateur de gaz. Une telle chambre de combustion peut avoir une forme annulaire. Le dernier étage de compression est habituellement accolé à un corps logeant la chambre de combustion, une sortie de ce dernier étage de compression communiquant avec le corps logeant la chambre de combustion. Dans la chambre de combustion, un mélange contenant cet air comprimé et un carburant est brûlé, les gaz d'échappement en résultant entraînant en rotation une ou plusieurs turbines de détente transformant l'énergie contenue dans ces gaz d'échappement en énergie mécanique.

Afin d'obtenir un remplissage en air comprimé le plus homogène possible de la chambre de combustion, le corps comporte traditionnellement une entrée d'air comprimé définissant un passage de forme circonférentielle, à savoir un passage qui s'étend sur une grande partie voire la totalité de la périphérie circulaire de ce corps.

Bien qu'intéressante, de telles entrées d'air peuvent être complexes à mettre en place sur le corps logeant la chambre de combustion. De telles entrées d'air sont également contraignantes en termes d'encombrement et de masse pour la turbine à gaz, et entraînent l'ajout de renforts structurels sur la turbine à gaz.

En outre, il est connu que le rendement de telles turbines à gaz est relativement faible. Notamment pour les turbomoteurs, type particulier de turbines à gaz utilisées traditionnellement pour les hélicoptères, ce rendement est de l'ordre de 25%.

Une solution connue pour améliorer ce rendement est de réchauffer l'air, après compression et avant son admission dans la chambre de combustion de la turbine à gaz. Cela permet alors de réduire le besoin thermique dans la chambre de combustion, et par suite, de réduire la consommation en carburant de cette turbine à gaz.

Ce réchauffement de l'air d'admission peut notamment être obtenu en utilisant la chaleur des gaz d'échappement sortant de la chambre de combustion, cette chaleur n'étant généralement pas utilisée. Pour cela, des échangeurs thermiques adaptés sont notamment utilisés dans les centrales thermiques industrielles. Par contre, l'utilisation de tels échangeurs au domaine spécifique des giravions, et des hélicoptères notamment, se heurte à plusieurs problèmes majeurs, tels que la masse et le volume de ces échangeurs, ainsi qu'une perte de puissance de la turbine à gaz utilisant un tel échangeur.

D'une part, les gaz d'échappement sortent de la chambre de combustion d'une turbine à gaz à grande vitesse et leur circulation dans un échangeur thermique récupérant une partie de leur chaleur génère des pertes de charge importantes sur ces gaz d'échappement qui entraînent alors une perte de puissance de la turbine à gaz. D'autre part, le passage de l'air comprimé sortant du compresseur par l'échangeur thermique avant d'être injecté dans la chambre de combustion est également générateur de pertes de charge importantes pénalisant les performances de la turbine à gaz. De plus, le volume disponible dans un hélicoptère étant restreint, l'implantation d'un échangeur thermique sur une turbine à gaz pose des problèmes d'encombrement. Enfin, la masse supplémentaire consécutive à l'intégration de cet échangeur thermique est également un critère important affectant les performances de l'hélicoptère.

Les document US 5182904, EP 1621742 et US 2009/0282804 décrivent diverses turbines à gaz comportant un échangeur thermique utilisé pour réchauffer, à l'aide des gaz d'échappement, l'air comprimé sortant du compresseur de cette turbine à gaz avant son entrée dans la chambre de combustion. Selon ces documents, une volute de sortie communiquant avec une ouverture de forme circonférentielle du compresseur est reliée à une conduite pour acheminer l'air comprimé vers l'échangeur thermique. Une conduite sortant de cet échangeur thermique est quant à elle reliée à une volute d'entrée communiquant avec une ouverture de forme circonférentielle du corps logeant la chambre de combustion.

Le document FR 3005109 décrit une unique volute à deux volumes reliant un échangeur thermique d'une part à la sortie d'un compresseur d'une turbine à gaz, et d'autre part à l'entrée d'un corps entourant sa chambre de combustion. Cette volute comporte une conduite en forme de spirale munie d'une première ouverture reliée à la sortie du compresseur, et une seconde ouverture reliée à l'entrée du corps logeant la chambre de combustion. Une paroi sépare ladite volute en deux volumes symétriques, où se trouvent respectivement les première et seconde ouverture.

Le document FR 3149346 décrit une turbomachine pour aéronef dont la chambre de combustion est alimentée en air comprimé par plusieurs volutes. Ces volutes sont reliées à une unique entrée de la chambre de combustion, éventuellement via un système de diffusion et de redressement d'air.

Enfin, le document US 2011/0146226 décrit une turbine à gaz dont le compresseur comporte deux sorties circonférentielles reliées respectivement à deux entrées du corps logeant la chambre de combustion. Ces deux entrées ne sont pas circonférentielles, mais orientées parallèlement à l'axe de rotation de la turbine à gaz. Les parois du corps orientent ensuite les deux flux d'air comprimé entrant vers une même zone de ce corps. Ces deux entrées forment ainsi des entrées d'air sensiblement tangentielles. Les flux d'air comprimé peuvent provenir directement du compresseur, ou d'un échangeur thermique alimenté par le compresseur.

La présente invention a alors pour objet de proposer une solution alternative pour l'admission de l'air comprimé au niveau de la chambre de combustion d'une turbine à gaz permettant de simplifier son implantation et de limiter sa masse et son encombrement, tout en permettant un remplissage homogène de la chambre de combustion en air comprimé.

Selon l'invention, une turbine à gaz comporte :
- un compresseur, et
- un corps logeant une chambre de combustion.

Cette turbine à gaz est remarquable en ce que le corps comporte deux ouvertures d'admission configurées pour faire entrer de l'air comprimé émis par le compresseur dans le corps, l'air comprimé alimentant la chambre de combustion, les deux ouvertures d'admission se faisant face de part et d'autre du corps.

Une telle turbine à gaz peut notamment être utilisée pour motoriser un aéronef à voilure tournante, tel un hélicoptère par exemple.

Les deux ouvertures d'admission sont destinées à être reliées fluidiquement respectivement à deux conduites d'entrée d'un ensemble de canalisation acheminant vers le corps l'air comprimé sortant directement du compresseur ou après avoir traversé un échangeur thermique.

On entend par « les deux ouvertures d'admission se faisant face de part et d'autre du corps », que les ouvertures d'admission sont en regard l'une de l'autre lorsque le corps est vide et ne comporte notamment pas la chambre de combustion. De la sorte, au moins une projection d'une des deux ouvertures d'admission sur l'autre ouverture d'admission est au moins partiellement en recouvrement de cette autre ouverture d'admission. Les deux ouvertures d'admission sont ainsi implantées de sorte à se faire face de part et d'autre du corps, et par suite de part et d'autre de la chambre de combustion qui est située à l'intérieur du corps.

La chambre de combustion peut être par exemple annulaire, une chambre intermédiaire étant située entre les parois du corps et la ou les parois délimitant la chambre de combustion. Cette chambre intermédiaire fait notamment fonction de chambre de tranquillisation de l'air comprimé entrant dans le corps, avant son admission dans la chambre de combustion.

De fait, l'air comprimé peut entrer dans le corps par ces deux ouvertures d'admission et remplir la chambre intermédiaire de façon sensiblement homogène. Ensuite, l'air comprimé est distribué de façon sensiblement homogène dans la chambre de combustion, contribuant notamment à l'obtention d'un bon rendement de la combustion du carburant dans la chambre de combustion.

Chaque ouverture d'admission est formée par un orifice ménagé dans la paroi du corps, par exemple de forme circulaire, ovoïde, oblongue ou autre. Un tel orifice est simple à réaliser, contrairement à une ouverture circonférentielle qui est de forme complexe. De même, une conduite d'entrée de forme tubulaire reliée au corps et communiquant fluidiquement avec l'intérieur du corps via une telle ouverture d'admission est plus simple à réaliser qu'une volute, par exemple en forme de spirale, reliée à une ouverture de forme circonférentielle.

De plus, la gestion de l'étanchéité au niveau du corps est potentiellement plus simple à réaliser avec un corps muni d'ouvertures d'admission selon l'invention à relier à des conduites d'entrée, qu'avec une volute selon l'art antérieur.

Un tel orifice impacte également peu les tenues mécaniques et thermiques du corps contrairement à une ouverture de forme circonférentielle qui est ouverte sensiblement sur la totalité de la périphérie du corps.

En effet, l'invention permet d'obtenir un corps monolithique, et qui permet dès lors de reprendre l'ensemble des efforts du moteur, à savoir le couple moteur et les forces inertielles du moteur. Il y a une continuité du chemin d'efforts entre la partie avant et la partie arrière du moteur liées par le corps. A l'inverse, dans le cas d'une volute, il faut faire passer les efforts au travers de la volute, ce qui s'avère de fait plus compliqué.

De même, une volute a une forme asymétrique qui tend donc à se déformer thermiquement de manière non homogène, ce qui peut induire des efforts sur le moteur, en particulier axialement le long de l'axe de rotation de ce moteur. A l'inverse, selon l'invention le corps peut se dilater radialement de façon sensiblement homogène, et le moteur peut alors avoir moins tendance à se déformer.

En outre, une volute, par exemple en forme de spirale, débouchant sur une ouverture de forme circonférentielle est plus pénalisante en termes de volume et de masse que deux conduites d'entrée tubulaires.

Enfin, la présence de deux ouvertures d'admission entraîne l'utilisation de deux conduites d'entrée, qui permet de répartir l'air comprimé entre ces deux conduites d'entrée. Par suite, la vitesse de circulation de l'air comprimé dans ces deux conduites d'entrée se trouve réduite par rapport à l'utilisation d'une unique conduite. Cette réduction de la vitesse de circulation de l'air comprimé permet alors de diminuer avantageusement les pertes de charge subies par l'air comprimé dans les conduites d'entrée, ces pertes de charge étant proportionnelles au carré de cette vitesse.

En conséquence, l'utilisation de deux ouvertures d'admission se faisant face de part et d'autre du corps logeant la chambre de combustion, permet de réduire la masse et l'encombrement de la turbine à gaz selon l'invention, ainsi que son coût, tout en conservant une répartition homogène de l'air comprimé dans la chambre de combustion.

La turbine à gaz selon l'invention peut de plus comporter une ou plusieurs des caractéristiques qui suivent, prises seules ou en combinaison.

Selon une possibilité, le corps peut entourer une paroi perforée, la chambre de combustion étant située à l'intérieur de la paroi perforée.

Cette paroi perforée comporte une multitude d'orifices contribuant d'une part à l'entrée de l'air comprimé dans la chambre de combustion et d'autre part à maintenir la combustion à l'intérieur de cette paroi perforée et par suite dans la chambre de combustion.

Selon une possibilité compatible avec les précédentes, les deux ouvertures d'admission, peuvent être centrées respectivement sur un premier axe AX1 et un deuxième axe AX2. Par exemple, les premier et deuxième axes AX1,AX2 peuvent être parallèles entre eux.

En particulier, les deux ouvertures d'admission peuvent être coaxiales, leurs sections pouvant être par exemple circulaire, ovoïde, oblongue.

Selon une possibilité compatible avec les précédentes, la turbine à gaz peut comporter deux diffuseurs en communication fluidique respectivement avec les deux ouvertures d'admission, les diffuseurs étant munis d'ailettes fixes configurées pour orienter l'air comprimé entrant dans le corps afin de le répartir dans la chambre de combustion.

Les deux diffuseurs sont positionnés de préférence dans le corps. Les diffuseurs permettent de faciliter l'entrée et la répartition dans la chambre intermédiaire du corps de l'air comprimé entrant par les ouvertures d'admission avant son admission dans la chambre de combustion, via la paroi perforée le cas échéant.

Les diffuseurs peuvent permettre, par exemple grâce aux formes et aux positions des ailettes, de répartir l'air rapidement et de manière homogène dans le corps. Les ailettes sont positionnées dans chaque diffuseur afin de transformer un écoulement de l'air comprimé traversant les deux ouvertures d'admission en un ou plusieurs écoulements tangentiels de l'air comprimé entrant dans la chambre intermédiaire du corps, ce qui contribue ainsi avantageusement à obtenir une répartition homogène de l'air comprimé dans la chambre intermédiaire, puis dans la chambre de combustion.

Dans ce but, les diffuseurs comportent des ailettes, désignées également « aubes », fixes. Ces ailettes fixes permettent d'orienter l'air comprimé entrant dans le corps, via les ouvertures d'admission, sensiblement tangentiellement aux parois du corps afin que l'air comprimé soit réparti de façon homogène dans la chambre intermédiaire.

Ces ailettes fixes orientent ainsi le flux d'air comprimé traversant les diffuseurs. Chaque diffuseur peut avoir une forme divergente qui ralentit le flux d'air.

Les ailettes peuvent être identiques. Alternativement, les ailettes peuvent être différentes en fonction de leurs positions autour d'un premier axe AX1 ou d'un deuxième axe AX2 des ouvertures d'admission. Les ailettes peuvent avoir des formes courbées, à savoir curvilignes. Les ailettes peuvent ainsi être définies par des surfaces gauches. Le nombre d'ailettes est par exemple compris entre quatre et douze par diffuseur.

Par ailleurs, les ailettes d'un premier diffuseur peuvent être équiréparties autour du premier axe AX1, et les ailettes d'un second diffuseur peuvent être équiréparties autour du deuxième axe AX2.

Selon une possibilité compatible avec les précédentes, la turbine à gaz peut comporter un ensemble de canalisation acheminant l'air comprimé sortant du compresseur vers le corps, l'ensemble de canalisation comportant au moins une conduite de sortie reliée au compresseur et deux conduites d'entrée reliées respectivement au corps pour permettre une communication fluidique de ces conduites d'entrée avec respectivement les deux ouvertures d'admission.

Les deux ouvertures d'admission peuvent être centrées respectivement sur un premier axe AX1 et un deuxième axe AX2, et les deux conduites d'entrée peuvent être reliées respectivement au corps selon un troisième axe AX3 et un quatrième axe AX4, le troisième axe AX3 étant parallèle au premier axe AX1, le quatrième axe AX4 étant parallèle au deuxième axe AX2.

En particulier, le premier axe AX1 et le troisième axe AX3 peuvent être confondus, et le deuxième axe AX2 et le quatrième axe AX4 peuvent être confondus.

De plus, ces quatre axes AX1-AX4 peuvent être parallèles entre eux. Les conduites d'entrée, peuvent par exemple être reliées aux ouvertures d'admission, radialement par rapport au corps, et de façon diamétralement opposée.

De plus, l'ensemble de canalisation peut comporter une unique conduite de sortie reliée par une ouverture de forme circonférentielle, par exemple en forme de spirale, au compresseur. Cette unique conduite de sortie est alors reliée aux deux conduites d'entrée, directement ou via un échangeur thermique par exemple.

Alternativement, l'ensemble de canalisation peut comporter deux conduites de sortie reliées respectivement par deux ouvertures de forme circonférentielle au compresseur. Les deux conduites de sortie sont alors reliées respectivement aux deux conduites d'entrée. Par exemple, chaque conduite de sortie est reliée à une seule conduite d'entrée, et chaque conduite d'entrée est reliée à une seule conduite de sortie. Selon un autre exemple, les deux conduites de sortie et les deux conduites d'entrée sont reliées à un échangeur thermique.

En outre, l'invention a aussi pour objet une installation motrice comportant :
- une turbine à gaz telle que précédemment décrite, munie d'un ensemble de canalisation comprenant au moins une conduite de sortie reliée au compresseur et deux conduites d'entrée reliées respectivement au corps, la turbine à gaz comportant une turbine de détente,
- une tuyère primaire d'échappement et
- un échangeur thermique, l'échangeur thermique étant relié d'une part aux conduites d'entrée, et à ladite au moins une conduite de sortie, et d'autre part à la tuyère primaire d'échappement, l'échangeur thermique réchauffant l'air comprimé sortant du compresseur avec des gaz d'échappement sortant de la chambre de combustion avant injection dans le corps par l'intermédiaire des conduites d'entrée.

Une telle installation motrice peut notamment être utilisée pour motoriser un aéronef à voilure tournante, tel un hélicoptère.

Enfin, l'invention a aussi pour objet un aéronef à voilure tournante comportant au moins une turbine à gaz telle que précédemment évoquée ou au moins une installation motrice telle que précédemment décrite.

L'invention et ses avantages apparaîtront avec plus de détails dans le cadre de la description qui suit avec des exemples de réalisation donnés à titre illustratif en référence aux figures annexées qui représentent :
- la figure 1, une vue de face en coupe d'une turbine à gaz selon l'invention,
- la figure 2, une vue en perspective d'un corps de la turbine à gaz de la figure 1,
- la figure 3, une vue de dessus en coupe de la turbine à gaz de la figure 1,
- la figure 4, une vue en perspective d'une installation motrice selon l'invention,
- la figure 5, une vue de dessus de l'installation motrice selon la figure 4, et
- la figure 6, une vue de dessus d'une installation motrice selon l'invention.

Les éléments présents dans plusieurs figures distinctes sont affectés d'une seule et même référence.

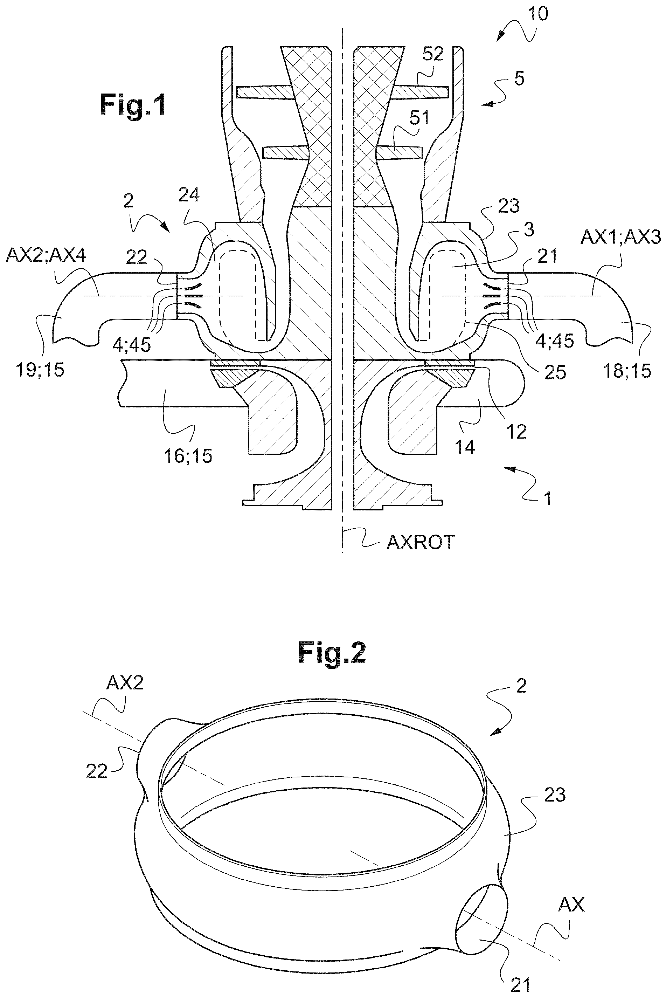

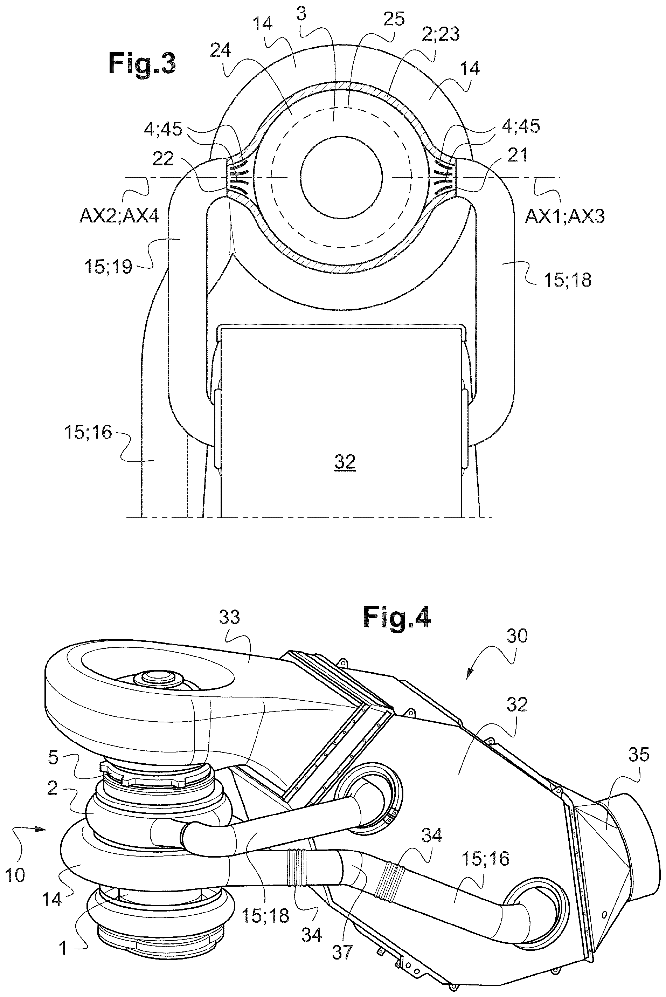

La figure 1 représente une vue de face en coupe partielle d'une turbine à gaz 10 selon l'invention. Une telle turbine à gaz 10 comporte notamment un compresseur 1 comprimant l'air provenant de l'extérieur et un corps 2. Le corps 2 est représenté selon une vue en perspective sur la figure 2 et selon une vue de dessus en coupe sur la figure 3.

Le compresseur 1 peut être un compresseur centrifuge tournant autour d'un axe de rotation AXROT. Le compresseur 1 et le corps 2 peuvent être agencés côte à côté comme sur la figure 1 ou à distance l'un de l'autre comme décrit par exemple dans le document US 2011/0146226.

Le corps 2 loge une chambre de combustion 3 dans laquelle est brûlé un mélange contenant cet air comprimé et un carburant. La chambre de combustion 3 est éventuellement entourée par une paroi 25 perforée. Une chambre intermédiaire 24 se trouve ainsi entre d'une part les parois 23 du corps 2 et d'autre part la paroi 25 perforée.

Cette paroi 25 perforée comporte une multitude d'orifices de faibles dimensions ainsi que des trous de dilution. Les trous de dilution autorisent l'entrée de l'air comprimé dans la chambre de combustion 3 alors que les orifices de faibles dimensions contribuent à maintenir la combustion à l'intérieur du volume délimité par cette paroi 25 perforée formant la chambre de combustion 3.

La chambre de combustion 3 peut être une chambre annulaire centrée autour de l'axe de rotation AXROT. La turbine à gaz 10 peut aussi comporter une turbine de détente 5 visible sur la figure 1. Cette turbine de détente 5 peut comporter un ou plusieurs étages d'aubes 51,52 (deux étages sont représentés sur la figure 1) entraînés en rotation autour de l'axe de rotation AXROT par les gaz d'échappement sortant de la chambre de combustion 3.

Le corps 2 comporte deux ouvertures d'admission 21,22, formées respectivement par deux orifices traversant la paroi 23 du corps 2 et débouchant dans la chambre intermédiaire 24. Chaque ouverture d'admission 21,22 met en communication fluidique la chambre intermédiaire 24 et une conduite d'entrée 18,19 reliée au corps 2. Les deux ouvertures d'admission 21,22 permettent ainsi l'entrée d'air dans le volume délimité par le corps 2, et par suite, dans la chambre de combustion 3, au travers de la paroi 25 perforée le cas échéant.

Les deux ouvertures d'admission 21,22 se font face de part et d'autre du corps 2 et, par suite, de la chambre de combustion 3. Les deux ouvertures d'admission 21,22 sont ainsi en regard l'une de l'autre dans le corps 2 en l'absence de la chambre de combustion 3.

Les deux ouvertures d'admission 21,22 peuvent être de différentes formes, par exemple circulaires, ovoïdes ou oblongues. Les deux ouvertures d'admission 21,22 peuvent notamment être centrées respectivement sur un premier axe AX1 et un deuxième axe AX2. Le premier axe AX1 et le deuxième axe AX2 peuvent notamment être parallèles entre eux. En particulier, les deux ouvertures d'admission 21,22 peuvent être coaxiales, et susceptibles de former alors des entrées d'air radiales.

Les deux ouvertures d'admission 21,22 sont destinées à communiquer fluidiquement avec respectivement des conduites d'entrée 18,19 d'un ensemble de canalisation 15 acheminant l'air comprimé sortant du compresseur 1 vers le corps 2. Les deux conduites d'entrée 18,19 peuvent être reliées respectivement au corps 2, au niveau de ces ouvertures d'admission 21,22 et avec des moyens usuels tels que des systèmes de vissage par exemple, selon un troisième axe AX3 et un quatrième axe AX4. Ce troisième axe AX3 peut être parallèle au premier axe AX1, et le quatrième axe AX4 peut être parallèle au deuxième axe AX2, les conduites d'entrée 18,19 pouvant alors être en communication fluidique respectivement avec les ouvertures d'admission 21,22 radialement par rapport à un axe de révolution du corps 2.

En particulier, les deux conduites d'entrée 18,19 peuvent être respectivement en communication fluidique avec les deux ouvertures d'admission 21,22 de façon coaxiale, comme représenté sur la figure 1.

L'ensemble de canalisation 15 comporte également une ou plusieurs conduites de sortie 16,17 reliées au compresseur 1 pour permettre l'acheminement de l'air comprimé vers les deux conduites d'entrée 18,19. Chaque conduite de sortie 16,17 peut par exemple comporter une volute 14, éventuellement en forme de spirale, communiquant fluidiquement avec une ou des ouvertures circonférentielles 12 du compresseur 1.

La turbine à gaz 10 selon l'invention peut également comporter deux diffuseurs 4 en communication fluidique respectivement avec les deux ouvertures d'admission 21,22. Chaque diffuseur 4 est muni d'ailettes 45 fixes configurées pour orienter l'air comprimé entrant dans le corps 2 afin de le répartir de façon sensiblement homogène dans la chambre intermédiaire 24, puis dans la chambre de combustion 3.

Les deux diffuseurs 4 sont par exemple agencés dans le corps 2. Les deux diffuseurs 4 peuvent être centrés respectivement autour du premier axe AX1 et du deuxième axe AX2 relatifs aux deux ouvertures d'admission 21,22. Dans ce cas, les ailettes 45 des deux diffuseurs peuvent être équiréparties respectivement autour du premier axe AX1 et du deuxième axe AX2.

Les ailettes 45 sont ainsi positionnées dans chaque diffuseur 4 afin de transformer un écoulement radial de l'air comprimé entrant par chaque ouverture d'admission 21,22, via chaque conduite d'entrée 18,19, en un écoulement tangentiel de l'air comprimé entrant dans la chambre intermédiaire 24 du corps 2 par rapport à la paroi 23 du corps 2, contribuant à la remplir de façon homogène. L'air comprimé peut ensuite être distribué, via le cas échéant la paroi 25 perforée, dans la chambre de combustion 3 de façon également homogène.

Les figures 4 à 6 représentent une installation motrice 30 munie d'une telle turbine à gaz 10. Cette installation motrice 30 peut par exemple être utilisée pour motoriser un aéronef à voilure tournante, tel un hélicoptère.

Cette installation motrice 30 comporte également une tuyère primaire d'échappement 33 reliée à la turbine à gaz 10 ainsi qu'un échangeur thermique 32 relié à cette tuyère primaire d'échappement 33, et une tuyère de sortie 35 reliée à l'échangeur thermique 32. L'échangeur thermique 32 est également relié d'une part aux conduites d'entrée 18,19 et à la ou aux conduites de sortie 16,17.

En conséquence, les gaz d'échappement sortant de la chambre de combustion 3 traversent les turbines de détente 5, puis atteignent la tuyère primaire d'échappement 33 et circulent dans l'échangeur thermique 32 avant de sortir par la tuyère de sortie 35. Simultanément, l'air comprimé sortant du compresseur 1 est acheminé par la ou les conduites de sortie 16,17 dans l'échangeur thermique 32 où il circule à contre-courant des gaz d'échappement et est alors réchauffé par les gaz d'échappement. L'air comprimé ainsi réchauffé sort alors de l'échangeur thermique 32, circule dans les deux conduites d'entrée 18,19 jusqu'à entrer dans le corps 2, et par suite la chambre de combustion 3. Les deux conduites d'entrée 18,19 sont reliées respectivement aux deux extrémités d'une cheminée de sortie traversant l'échangeur thermique 32 de part en part.

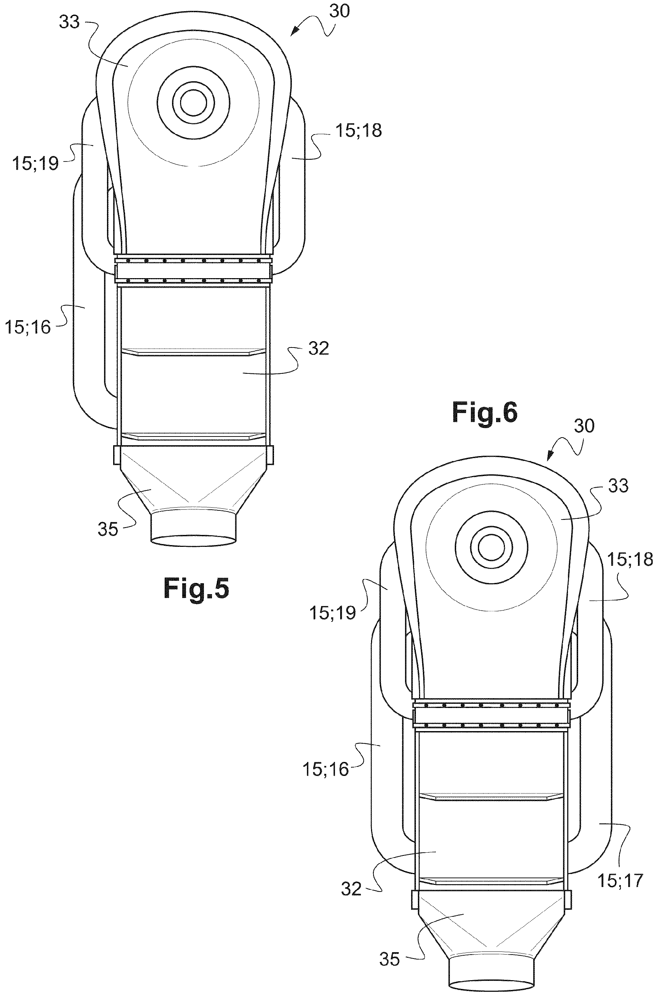

Selon la figure 4 et la figure 5, l'ensemble de canalisation 15 peut comporter une unique conduite de sortie 16 reliée d'une part au compresseur 1 via une volute et une ouverture circonférentielle, et d'autre part à l'échangeur thermique 32. De la sorte, l'installation motrice 30 comporte des liaisons fluidiques reliées à l'échangeur thermique 32 selon une configuration de type « J », à savoir munie d'une unique conduite de sortie 16 venant du compresseur 1 et de deux conduites d'entrée 18,19 reliées au corps 2.

Selon la figure 6, l'ensemble de canalisation 15 peut comporter deux conduites de sortie 16,17 reliées d'une part au compresseur 1 via respectivement deux volutes et deux ouvertures circonférentielles, et d'autre part à l'échangeur thermique 32. Les deux conduites de sortie 16,17 sont reliées respectivement aux deux extrémités d'une cheminée d'entrée traversant l'échangeur thermique 32 de part en part. De la sorte, l'installation motrice 30 comporte des liaisons fluidiques reliées à l'échangeur thermique 32 selon une configuration de type « I », à savoir munie de deux conduites de sortie 16,17 venant du compresseur 1 et de deux conduites d'entrée 18,19 reliées au corps 2.

Enfin, afin de résister aux contraintes thermiques et mécaniques tout en assurant l'étanchéité nécessaire au bon fonctionnement de l'échangeur thermique 32, des soufflets métalliques 34 peuvent être agencés sur la ou les conduites de sortie 16,17 et/ou sur les deux conduites d'entrée 18,19. De tels soufflets métalliques 34 sont notamment présents sur la conduite de sortie 16 comme représentés sur la figure 4.

Ces soufflets métalliques 34 permettent d'absorber les vibrations et les dilatations auxquelles sont soumis les éléments de l'installation motrice 30, et en particulier l'échangeur thermique 32. De tels soufflets métalliques 34 peuvent être agencés de part et d'autre d'un coude 37 des conduites de sortie 16,17 et/ou d'entrée 18,19 de sorte à absorber les vibrations et les dilatations dans plusieurs directions.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Turbine à gaz (10) comportant :
- un compresseur (1), et
- un corps (2) logeant une chambre de combustion (3),
**caractérisée en ce que** ledit corps (2) comporte deux ouvertures d'admission (22,23) configurées pour faire entrer de l'air comprimé émis par ledit compresseur (1) dans ledit corps (2), ledit air comprimé alimentant ladite chambre de combustion (3), lesdites deux ouvertures d'admission (21,22) se faisant face de part et d'autre dudit corps (2).

2. Turbine à gaz (10) selon la revendication 1,
dans laquelle ledit corps (2) entoure une paroi (25) perforée, ladite chambre de combustion (3) étant située à l'intérieur de ladite paroi (25) perforée.

3. Turbine à gaz (10) selon l'une quelconque des revendications 1 à 2,
comportant deux diffuseurs (4) en communication fluidique respectivement avec lesdites deux ouvertures d'admission (21,22), lesdits diffuseurs (4) étant munis d'ailettes (45) fixes configurées pour orienter l'air comprimé entrant dans ledit corps (2) afin de le répartir dans ladite chambre de combustion (3).

4. Turbine à gaz (10) selon la revendication 3,
dans laquelle lesdites deux ouvertures d'admission (21,22) sont centrées respectivement sur un premier axe (AX1) et un deuxième axe (AX2), et lesdites ailettes (45) sont équiréparties pour lesdits diffuseurs (4) respectivement autour desdits premier axe (AX1) et deuxième axe (AX2).

5. Turbine à gaz (10) selon l'une quelconque des revendications 3 à 4,
dans laquelle lesdits deux diffuseurs (4) sont situés dans ledit corps (2).

6. Turbine à gaz (10) selon l'une quelconque des revendications 3 à 5,
dans laquelle lesdites ailettes (45) sont positionnées dans chaque diffuseur (4) afin de transformer un écoulement de l'air comprimé entrant par chaque ouverture d'admission (21,22) en un écoulement tangentiel dudit air comprimé entrant dans une chambre intermédiaire (24) dudit corps (2), ladite chambre intermédiaire (24) étant située dans ledit corps (2) et entourant ladite chambre de combustion (3).

7. Turbine à gaz (10) selon l'une quelconque des revendications 1 à 6,
dans laquelle lesdites deux ouvertures d'admission (21,22) sont centrées respectivement sur un premier axe (AX1) et un deuxième axe (AX2) parallèles entre eux.

8. Turbine à gaz (10) selon l'une quelconque des revendications 1 à 6,
dans laquelle lesdites deux ouvertures d'admission (21,22) sont coaxiales.

9. Turbine à gaz (10) selon l'une quelconque des revendications 1 à 8, comportant un ensemble de canalisation (15) acheminant l'air comprimé sortant dudit compresseur (1) vers ledit corps (2), ledit ensemble de canalisation (25) comportant au moins une conduite de sortie (16,17) reliée audit compresseur (1) et deux conduites d'entrée (18,19) reliées respectivement auxdites deux ouvertures d'admission (21,22).

10. Turbine à gaz (10) selon la revendication 9,
dans laquelle lesdites deux ouvertures d'admission (21,22) sont centrées respectivement sur un premier axe (AX1) et un deuxième axe (AX2), ledit premier axe (AX1) et un deuxième axe (AX2), et lesdites deux conduites d'entrée (18,19) sont reliées respectivement auxdites ouvertures d'admission (21,22) selon un troisième axe (AX3) et un quatrième axe (AX4), ledit troisième axe (AX3) étant parallèle audit premier axe (AX1), ledit quatrième axe (AX4) étant parallèles audit deuxième axe (AX2).

11. Turbine à gaz (10) selon l'une quelconque des revendications 9 à 10,
dans laquelle lesdites conduites d'entrée (18,19) sont reliées respectivement auxdites ouvertures d'admission (21,22) radialement par rapport audit corps (2).

12. Turbine à gaz (10) selon l'une quelconque des revendications 9 à 11,
dans laquelle ledit ensemble de canalisation (15) comporte une unique conduite de sortie (16) reliée par une ouverture circonférentielle audit compresseur (1), ou deux conduites de sortie (16,17) reliées respectivement par deux ouvertures circonférentielles audit compresseur (1).

13. Installation motrice (30) comportant
- une turbine à gaz (10) selon l'une quelconque des revendications 9 à 12 munie d'une turbine de détente (5),
- une tuyère primaire d'échappement (33) et
- un échangeur thermique (32), ledit échangeur thermique (32) étant relié d'une part auxdites conduites d'entrée (18,19) et à ladite au moins une conduite de sortie (16,17), et d'autre part à ladite tuyère primaire d'échappement (33), ledit échangeur thermique (32) réchauffant l'air comprimé sortant dudit compresseur (1) avec des gaz d'échappement sortant de ladite chambre de combustion (3) avant injection dans ledit corps (2) par l'intermédiaire desdites conduites d'entrée (18,19).

14. Aéronef comportant au moins une installation motrice (30) selon la revendication 13.
